(19) Europäisches Patentamt
European Patent Office
Office européen des brevets

(11) **EP 1 683 219 B1**

(12) **EUROPEAN PATENT SPECIFICATION**

(45) Date of publication and mention
of the grant of the patent:
**23.12.2015 Bulletin 2015/52**

(51) Int Cl.:
*H01M 4/58* (2010.01)    *H01M 4/02* (2006.01)
*H01M 4/133* (2010.01)    *H01M 4/587* (2010.01)
*H01M 4/62* (2006.01)    *H01M 10/0525* (2010.01)
*H01M 4/583* (2010.01)    *H01M 4/1393* (2010.01)

(21) Application number: **04793402.1**

(22) Date of filing: **29.10.2004**

(86) International application number:
**PCT/JP2004/016482**

(87) International publication number:
**WO 2005/043653 (12.05.2005 Gazette 2005/19)**

(54) **CARBON MATERIAL FOR BATTERY ELECTRODE AND PRODUCTION METHOD AND USE THEREOF**

KOHLENSTOFFMATERIAL FÜR EINE BATTERIEELEKTRODE UND HERSTELLUNGSVERFAHREN UND VERWENDUNG DAFÜR

MATIERE DE CARBONE POUR ELECTRODE DE BATTERIE ET SON PROCEDE DE PRODUCTION ET D'UTILISATION

(84) Designated Contracting States:
**AT BE BG CH CY CZ DE DK EE ES FI FR GB GR HU IE IT LI LU MC NL PL PT RO SE SI SK TR**

(30) Priority: **31.10.2003 JP 2003371494**
**12.11.2003 US 518660 P**

(43) Date of publication of application:
**26.07.2006 Bulletin 2006/30**

(73) Proprietor: **Showa Denko K.K.**
**Tokyo 105-8518 (JP)**

(72) Inventors:
• **SOTOWA, Chiaki**
**C. R&D Center, Showa Denko K.K.**
**Kawasaki-shi, Kanagawa 210-0858 (JP)**
• **TAKEUCHI, Masataka**
**Corp. R&D Center, Showa Denko K.K.**
**Kawasaki-shi,**
**Kanagawa 210-0858 (JP)**

• **SUDOH, Akinori**
**Omachi Plant, Showa Denko K.K.**
**Omachi-Shi,**
**Nagano 398-0002 (JP)**

(74) Representative: **Strehl Schübel-Hopf & Partner**
**Maximilianstrasse 54**
**80538 München (DE)**

(56) References cited:
WO-A-03/028128    JP-A- 11 054 123
JP-A- 11 154 513    JP-A- 11 343 108
JP-A- H05 121 066    JP-A- 2002 087 807
JP-A- 2003 173 778    JP-A- 2004 079 344
JP-A- 2004 210 634    JP-A- 2004 220 926
US-A- 5 093 216    US-A1- 2002 061 445

**Description**

**TECHNICAL FIELD**

The present invention relates to a carbon powder material for a battery electrode, particularly for a non-aqueous electrolytic solution secondary battery, having a high charge/discharge capacity and exhibiting excellent charge/discharge cycle characteristics and large-current load characteristics. More particularly, the invention relates to a negative electrode carbon powder material for a lithium secondary battery electrode.

**BACKGROUND ART**

In accordance with development of small-sized, lightweight portable electronic apparatuses of high performance, keen demand has arisen for a lithium ion secondary battery having high energy density; i.e., high capacity. In most lithium ion secondary batteries, graphite fine powder is employed as a negative electrode material, since lithium ions can intercalate between layers of graphite. The more crystalline the graphite, the higher discharge capacity the graphite exhibits. Therefore, studies have been made on use of high-crystallinity carbon materials as a negative electrode material, *inter alia,* natural graphite as the most preferable, for a lithium ion secondary battery. When employed in a negative electrode, a graphite material theoretically exhibits a discharge capacity of 372 mAh/g. However, improvement of such graphite material has proceeded, and in recent years, graphite material having a discharge capacity within a practical range of 350 to 360 mAh/g has been developed.

As mentioned above, the discharge capacity per weight has been improved to a level nearly equal to a theoretical value. Thus, the recent trend is toward elevating density of battery electrodes by high compression molding, so that the discharge capacity per volume can be enhanced through increasing the filling density of electrode material charged in a battery housing.

As the crystallinity of graphite increases, there arise problems of decrease in coulombic efficiency (i.e., initial discharge capacity/initial charge capacity) and increase in irreversible capacity, which are conceivably caused by decomposition of an electrolyte (see J. Electrochem. Soc., Vol. 117, 1970, p. 222). Thus, in an attempt to solve the above problems, there has been proposed a negative electrode material in which a high-crystallinity carbon material member is coated with amorphous carbon, so as to suppress decrease in coulombic efficiency and increase in irreversible capacity, which are conceivably caused by decomposition of an electrolyte, as well as deterioration of cycle characteristics (see EP No.520667 and JP-A-11-310405). However, the technique disclosed in EP No.520667 where an amorphous carbon layer is formed on a high-crystallinity carbon material member through CVD (chemical vapor deposition, or vapor phase deposition) involves serious practical problems of high cost, low mass productivity and the like. In addition, a negative electrode material coated with an amorphous carbon layer, a so-called double-layer carbon material, still has drawbacks stemming from the amorphous carbon layer; e.g., low capacity and low coulombic efficiency. Although JP-A-11-310405 and other documents disclose a technique in which an amorphous carbon layer is formed through a liquid-phase carbon formation method, which is advantageous in terms of cost and mass productivity, the aforementioned drawbacks involved in the amorphous carbon layer have not yet been resolved.

Particles of high-crystallinity graphite (e.g., natural graphite) tend to be deformed through application of pressure, and the layer structure of the graphite tends to be oriented. Such deformation/orientation occurs during fabrication of an electrode (i.e., application of paste or pressing), thereby raising problems; falling of the fabricated electrode, poor impregnation performance with respect to electrolyte, and deterioration of current-load characteristics and cycle characteristics. These problems have not been solved completely even in the aforementioned techniques where the carbon member is coated with an amorphous carbon layer.

WO 03/028128 A2 discloses a carbon composite material comprising carbon particles having a graphite structure, the particles having a carbonaceous material deposited on at least a portion of the surface thereof, and fibrous carbon, wherein the carbonaceous material is obtained by subjecting a composition containing polymer to heat treatment.

US 5,093,216 discloses a phosphorus-containing carbonaceous material for use in electrodes. The carbonaceous material can be obtained by carbonizing an organic material.

US 2001/0061445 A1 discloses carbon powder materials for use as electrode materials which may be coated with petroleum tar pitch.

JP 11-154513 A discloses a graphite material used for an electrode, wherein the graphite material has an X ray intensity ratio between (110) and (004) planes of 0.05 to 0.5.

JP H05-121066 discloses a carbon material for use in electrodes, wherein carbon core particles are coated with binder pitches.

**DISCLOSURE OF THE INVENTION**

Thus, an object of the present invention is to prepare carbon particles having a particle size of several tens of nm to several hundreds of $\mu$m, each particle having a virtually homogeneous structure from the surface to the center of the particle by compounding and integrating a carbonaceous particle (particularly natural graphite particles) serving as a core material with other carbon materials, and thereby provide a battery electrode material which undergoes less deformation/orientation due to application of pressure, has a large discharge capacity, exhibits excellent coulombic efficiency and cycle characteristics, is employable under large current conditions, and has small irreversible capacity.

The present inventors have carried out extensive studies in order to solve the aforementioned problems involved in the related art, and have found that carbon particles, each particle having a virtually homogeneous structure from the surface to the center thereof, can be produced by uniformly incorporating a specific amount of an organic substance into high-crystallinity graphite particles having a specific particle size, through impregnation, and by carbonizing the organic substance at high temperature, and that when the ratio of peak intensity attributed to a (110) plane to that attributed to a (004) plane, the ratio being determined through X-ray diffraction spectroscopic analysis of a specific press-molded compact containing the carbon particles, reaches a specific value ($\geq 0.1$), a battery electrode material which undergoes less pressure-induced deformation, exhibits low shape selectivity of particles (after pressure has been applied thereto), exhibits excellent coulombic efficiency, cycle characteristics, large-current characteristics, and has small irreversible capacity can be produced without impairing a characteristically high discharge capacity of high-crystallinity graphite particles. The present invention has been accomplished on the basis of these findings.

Accordingly, the present invention is directed to the carbon powder materials for battery electrodes, method for producing the carbon powder material, and uses thereof enumerated in the claims.

**BRIEF DESCRIPTION OF DRAWINGS**

Fig.1 is a chart showing an X-ray diffraction profile of the (004) plane of an electrode sheet fabricated from the carbonaceous powder of Example 2.
Fig.2 is a chart showing an X-ray diffraction profile of the (110) plane of an electrode sheet fabricated from the carbonaceous powder of Example 2.
Fig.3 is a chart showing an X-ray diffraction profile of the (004) plane of an electrode sheet fabricated from the carbonaceous powder of Comparative Example 1.
Fig.4 is a chart showing an X-ray diffraction profile of the (110) plane of an electrode sheet fabricated from the carbonaceous powder of Comparative Example 1.

**BEST MODE FOR CARRYING OUT THE INVENTION**

The present invention will next be described in detail.

[Carbonaceous particles]

In the present invention, carbonaceous particles serve as a core material, and the particles allow intercalation and release of lithium ions. The larger the amount of lithium ions intercalated in and released from the carbonaceous particles, the more preferable. From the viewpoint, high-crystallinity graphite such as natural graphite is preferred. Such high-crystallinity graphite preferably has the following properties: Co of a (002) plane as measured by means of X-ray diffractometry is 0.6703 to 0.6800 nm; La (the size of a crystallite as measured along the a-axis) is greater than 100 nm; Lc (the size of a crystallite as measured along the c-axis) is greater than 100 nm; and laser Raman R value (the ratio of the intensity of a peak at 1,360 cm$^{-1}$ in a laser Raman spectrum to that of a peak at 1,580 cm$^{-1}$ in the spectrum) is 0.01 to 0.9.

Alternatively, carbonaceous particles formed of easily-graphitizing carbon material (soft carbon), which is readily graphitized through heat treatment at 1,800 to 3,300°C performed in a subsequent step, may also be employed. Examples of the carbon material include particles of a coke such as petroleum-derived pitch coke or coal-derived pitch coke.

The graphite particles which are preferably employed as a core material in the present invention may have a shape of clods, flakes, spheres or fiber. Among them, spherical graphite particles and clod-shape graphite particles are preferred. The graphite particles serving as a core material have a mean roundness as measured by use of a flow particle image analyzer of 0.85 to 0.99. When the mean roundness is less than 0.85, the density of graphite particles charged during formation of an electrode cannot be elevated, thereby lowering the discharge capacity per volume, whereas when the mean roundness is in excess of 0.99, it means that the graphite particles contains virtually no microparticles having low roundness, thereby failing to elevate the discharge capacity during formation of an electrode. Furthermore, the amount of graphite particles having a roundness less than 0.90 is preferably controlled to be within a range of 2 to 20% by number. The mean roundness may be regulated by use of, for example, a particle shape regulator (e.g., mechano-fusion (surface fusion) treatment).

The carbonaceous particles have a mean particle size of 10 to 40 $\mu$m as determined through a laser diffraction scattering method, more preferably 10 to 30 $\mu$m. The particle size distribution profile preferably includes virtually no portions corresponding to particles having a particle size of 1 $\mu$m or less or of 80 $\mu$m or more. This is because when the particle size is excessively large, carbon powder contained in the carbon material for an electrode has a large particle size. When such an electrode is employed as a negative electrode material for a secondary battery, microparticles are formed through charge/discharge reaction, thereby deteriorating cycle characteristics. When the particle size is too small, such carbonaceous particles are not effectively involved in electrochemical reaction with lithium ions, thereby deteriorating capacity and cycle characteristics.

The particle size distribution may be regulated through a known method such as pulverization or classification. Examples of pulverizing apparatuses include a hammer mill, a jaw crusher, and a collision-type pulverizer. Examples of classification methods employable in the invention include gas-flow classification and classification by means of a sieve. Examples of gas-flow classification apparatuses include a Turbo Classifier and a Turboplex (Product names: manufactured by HOSOKAWA MICRON CORPORATION.).

The carbonaceous particles may assume a crystalline (graphite crystalline) carbon portion and an amorphous carbon portion, as observed in a bright field image under a transmission electron microscope. The transmission electron microscope has long been employed in structural analysis of carbon materials. Among techniques by use of the microscope, a high-resolution technique, which realizes observation of a crystal plane as a lattice image, particularly a hexagonal network plane as a (002) lattice image, enables direct observation of a layer structure of carbon at a magnification of about 400,000 times or more. Thus, the transmission electron microscope serves as a powerful tool for the characterization of carbon, and is employed for analysis of a crystalline carbon portion and an amorphous carbon portion.

Briefly, a region of interest in a bright field is characterized on the basis of patterns obtained through selected area electron diffraction (SAD). The characterization is described in detail in "Novel Experimental Techniques for Carbon Materials (analysis)," edited by The Carbon Society of Japan, published by SIPEC CORP., p. 18-26 and 44-50, and "Guide to Carbon material, revised edition, authored by Michio Inagaki et al., edited by The Carbon Society of Japan, p. 29-40.

The term "crystalline region" used herein means a region characterized by a diffraction pattern of, for example, a readily-graphitizing carbon treated at 2,800°C (i.e., a diffraction pattern having two or more spots observed in a selected area electron diffraction pattern), whereas the term "amorphous region" used herein means a region characterized by a diffraction pattern of, for example, a difficult-to-graphitize carbon treated at 1,200 to 2,800°C (i.e., a diffraction pattern having only one spot attributed to a (002) plane observed in a selected area electron diffraction pattern).

In the present invention, it is preferable that in a bright field image observed under a transmission microscope, an area ratio of a crystalline carbon portion to an amorphous carbon portion in the carbonaceous particles be 95 to 50 : 5 to 50, more preferably 90 to 50 : 10 to 50. When the area ratio of a crystalline carbon portion to an amorphous carbon portion is less than 50 : 50, a negative electrode material produced from the particles fails to attain high discharge capacity. When the area ratio of a crystalline carbon portion to an amorphous carbon portion is more than 95 : 5, coulombic efficiency and cycle characteristics are deteriorated due to the crystalline carbon portion predominantly contained in the carbonaceous material, unless the surface is completely covered with a carbon layer. However, when the surface is completely covered with a carbon layer, capacity decreases due to a problem intrinsic to a double layer.

[Compounded carbon powder material]

In the present invention, a carbon material derived from an organic compound serving as a polymer source material is compounded with carbonaceous particles serving as a core material by a process described in more detail below. The carbon material is a thermally treated product of an organic substance serving as a polymer source material. The compounded carbon powder material is produced through a step of incorporating the organic compound or a solution thereof through deposition and permeation into core material particles, polymerizing the organic compound and a step of carbonizing and/or graphitizing the organic compound.

The organic compound to be incorporated into the core material particles through deposition, permeation and polymerization in the present invention is preferably a polymer capable of bonding to the core material particles. The term "polymer having a bonding property" refers to a substance which allows core material particles to be tightly bonded together through chemical bonding such as covalent bonding, van der Waals bonding or hydrogen bonding or physical bonding such as an anchor effect by intervening among the particles. Any polymer may be employed so long as the polymer exhibits a resistivity against compression, bending, peeling, impact, tension, tearing, etc. during treatment such as mixing, stirring, removing of solvent, or heat treatment, to such a degree that peel-off of the polymer from the particles is virtually prevented. For example, the polymer is at least one species selected from the group consisting of phenolic resins, polyvinyl alcohol resins, furan resins, cellulose resins, polystyrene resins, polyimide resins, and epoxy resins. Of these, phenolic resins and polyvinyl alcohol resins are preferred.

The organic compound to be incorporated into the carbonaceous particles serving as a core material through deposition and permeation in the present invention is preferably a starting material for a phenolic resin. A dense carbonaceous material is produced by calcining a phenolic resin. It is assumed that such a high density may be realized through the process where unsaturated bonds of starting materials for phenolic resin are reacted to form a phenolic resin, which contributes to mitigating decomposition during a heat treatment (or calcining) step, thereby preventing foaming.

Among phenolic resins produced by reaction of a phenol compound with an aldehyde compound, those employable in the present invention are non-modified phenolic resins such as novolak resins and resol resins and partially modified phenolic resins. In addition, rubber such as nitrile rubber may be added to the phenolic resin in accordance with needs. Examples of the phenol serving as a starting material include phenol, cresol, xylenol, and alkylphenols having an alkyl group containing 20 or less carbon atoms.

The phenolic resin is preferably a so-called modified phenolic resin, which is produced by modifying a phenolic resin with a drying oil or a fatty acid thereof. Through incorporation of a drying oil or a fatty acid thereof, foaming is further prevented during the calcination step, and thereby a carbonaceous layer of a higher density can be obtained.

The phenolic resin modified with a drying oil or a fatty acid thereof employable in the present invention may be produced by causing a phenol compound to be addition-reacted with a drying oil in the presence of a strong acid catalyst, adding a base catalyst to the reaction mixture so as to adjust the conditions to be basic, and causing the mixture to be addition-reacted with formalin. Alternatively, the modified phenolic resin may be produced by reacting a phenol with formalin, followed by adding a drying oil to the reaction product.

The drying oil is a vegetable oil which, when formed into thin film and exposed to air, is dried up and solidified in a relatively short period of time. Examples of the drying oil include generally known oil species such as tung oil, linseed oil, dehydrated castor oil, soybean oil, and cashew nut oil, and a fatty acid contained in the oils.

The amount of the drying oil or a fatty acid thereof with respect the phenolic resin is preferably 5 to 50 parts by mass based on 100 parts by mass of the phenolic resin (e.g., a phenol-folmalin condensate). When the amount of drying oil or fatty acid thereof is in excess of 50 parts by mass, bonding property of the core material particles of the present invention decreases.

[Method for compounding carbon material]

The method of the present invention for compounding a carbon material with core material particles includes a step of incorporating an organic compound or a solution thereof into the core material particles through deposition and permeation, polymerizing the organic compound and a step of carbonizing and/or graphitizing the organic compound. Alternatively, the method preferably includes a step of incorporating an organic compound or a solution thereof into the core material carbonaceous particles through deposition and/or permeation, a step of heating the organic compound, and a step of carbonizing and/or graphitizing the organic compound. Through heat treatment of the organic compound or a solution thereof performed after incorporation thereof into the core material particles through deposition and/or permeation and before carbonizing and/or graphitizing, the organic compound is tightly affixed, through polymerization, to the carbonaceous particles.

No particular limitation is imposed on the amount of carbon material to be compounded, and the amount is preferably 2 to 200 parts by mass based on 100 parts by mass of the carbonaceous particles, more preferably 4 to 100 parts by mass, most preferably 10 to 25 parts by mass.

In the present invention, the organic substance to be incorporated through deposition and permeation into the core material particles is a starting material for forming a polymer. This is because a starting material, which has a lower molecular weight/viscosity, can thoroughly and uniformly permeate into the inside of the core carbonaceous particles. As mentioned above, phenol resin is preferred as a polymer, and thus starting materials for phenolic resins such as formalin and a phenolic derivative are preferred.

Compounding phenolic resin with core material in liquid phase:

In the present invention, compounding a resin with core material particles is preferably performed through a method including reacting a phenol with a formaldehyde in the presence of a catalyst while mixing with the core material particles. The term "phenol" as used herein encompasses phenols as well as phenol derivatives. Besides phenol, phenol derivatives having three functional groups such as m-cresol and phenol derivatives having four functional groups such as bisphenol A are included. Alternatively, a mixture containing two or more of the aforementioned phenol derivatives may also be employed. Among formaldehydes, formalin is most preferred, but paraformaldehyde may also be employed.

Examples of the reaction catalyst to be employed include a basic substance such as hexamethylenediamine, which forms an -NCH$_2$ bond between phenol and a benzene nucleus.

To a mixture containing a phenol compound, a formaldehyde and a reaction catalyst, core material particles are added, and the resultant mixture is allowed to react in a reaction vessel. In this case, the ratio by mole of phenol compound to formaldehyde is preferably set to be 1 (phenol compound) : a range of 1 to 3.5 (formaldehyde). The amount of the core material particles is preferably controlled to be within a range of 5 to 3,000 parts by mass based on 100 parts by mass of a phenol compound. The reaction is carried out in the presence of water in such an amount that the reaction system can be stirred.

Upon polymerization, reactant liquid must be caused to permeate cavities of core material particles. Accordingly, the reaction system is evacuated once to ten-odd times before or during stirring. However, since a large amount of a phenol compound and a formaldehyde are vaporized in the process, it is preferable that the evacuation be carried out after mixing the core material particles and water, and then after the pressure is adjusted to ambient pressure, a phenol compound and a formaldehyde are added and mixed therein. The lower the pressure in the vacuum, the more preferred, and the pressure is 0.133 kPa to 13.3 kPa (100 Torr to 1 Torr).

Most of graphite powders employable as core material have a poor affinity to water. In such a case, graphite powder may be surface-oxidized in advance before use. Surface oxidation may be performed through any known method such as air oxidation, treatment by use of a nitric acid or a similar compound, or treatment by use of an aqueous potassium bichromate solution.

When a phenol, a formaldehyde, a catalyst, core material particles and water are mixed, the reaction system at an initial stage has a mayonnaise-like viscosity. As time elapses, a condensate of a phenol and a formaldehyde containing the core material particles begins to separate from water present in the system. At the time point when reaction reaches a desired reaction degree, stirring is terminated, and the mixture is cooled, whereby black particles are precipitated. The precipitate is washed and filtered, to thereby provide compounded carbon particles employed in the present invention.

The amount of the precipitating resin can be elevated by increasing the concentration of phenol or formaldehyde in the reaction system and can be lowered by decreasing the concentration of phenol or formaldehyde in the reaction system. Thus, the amount of the precipitating resin can be controlled by modifying the amount of water, a phenol or a formaldehyde. The amount of water, a phenol, or a formaldehyde may be adjusted in advance before reaction, or during reaction by adding dropwise any of these components into the reaction system.

The organic compound is preferably employed in the form of solution, since an organic compound can exhibit a lower viscosity in form of solution, which enables uniform and complete permeation of the organic compound into the inside of the core material carbonaceous particles. No particular limitation is imposed on the solvent for preparing the solution, so long as a raw material for a polymer can be dissolved and/or dispersed in the solvent. Examples of the solution include water, acetone, ethanol, acetonitrile, and ethyl acetate.

The polymerization step may be carried out at a temperature of about 100 °C to about 500 °C.

The carbon material layer provided through deposition and permeation according to the present invention is a highly crystalline carbon layer exhibiting a ratio of 0.4 or lower for a peak intensity at 1,360 cm$^{-1}$ to a peak intensity at 1,580 cm$^{-1}$ in a laser Raman spectrum. When the ratio is 0.4 or higher, the carbon layer has insufficient crystallinity, thereby lowering the discharge capacity and coulombic efficiency of the battery electrode carbon material of the present invention, which is not preferred.

[Method for depositing carbon fiber]

Preferably, carbon fiber is deposited on the surface of the carbon powder material for a battery electrode according to the present invention. Regarding the carbon fiber employed in the present invention, vapor grown carbon fiber produced through vapor phase growth is preferred, since the carbon fiber has high electrical conductivity, small fiber diameter, and high aspect ratio. Among vapor grown carbon fiber species, a vapor grown carbon fiber having high electrical conductivity and high crystallinity is preferred. When an electrode produced from the carbon powder material is incorporated in a lithium ion battery, current must be passed throughout the electrode (i.e., negative electrode) rapidly. Thus, preferably, vapor grown carbon fiber is grown in a direction parallel to the fiber axis and has a branched structure. When the carbon fiber has a branched structure, electric contact among carbon particles is facilitated by virtue of the branched fiber, thereby enhancing electrical conductivity.

The vapor grown carbon fiber may be produced through, for example, a method of feeding a gasified organic compound and iron serving as a catalyst into a high-temperature atmosphere.

Other than as-produced vapor grown carbon fiber, vapor grown carbon fiber which has been heat-treated at 800 to 1,500°C or which has been graphitized at 2,000 to 3,000°C may also be employed. Among them, vapor grown carbon fiber which has been treated at about 1,500°C is preferred.

In a preferred embodiment of the present invention, the vapor grown carbon fiber has a branched structure.

The carbon filament, including branch portions, may have hollow spaces in the inside, and a hollow space inside the filament may communicate with hollow spaces in other portions of the filament. In this case, tube-shaped carbon layers are continuously linked together. The term "hollow structure" refers to a tubular structure of a carbon layer and includes an imperfect cylindrical structure, a cylinder having partially cut off portions, and a carbon layer integrated from two laminated carbon layers. No particular limitation is imposed on the form of the cross-section of the cylinder, the form may be a perfect circle, an oval or a polygon. No particular limitation is imposed on the crystallinity of the carbon layer, which is represented by the plane distance $d_{002}$. The $d_{002}$ as determined through X-ray diffraction is preferably 0.344 nm or less, more preferably 0.339 nm or less, most preferably 0.338 nm or less, with Lc, the thickness of a crystallite as measured along the c-axis, is 40 nm or less.

The vapor grown carbon fiber employed in the present invention has a fiber outer diameter of 2 to 1,000 nm and an aspect ratio of 10 to 15,000, preferably a fiber outer diameter of 10 to 500 nm and a fiber length of 1 to 100 $\mu$m (an aspect ratio of 2 to 2,000), or a fiber outer diameter of 2 to 50 nm and a fiber length of 0.5 to 50 $\mu$m (an aspect ratio of 10 to 25,000).

After production of a vapor grown carbon fiber, crystallinity of the fiber can be further increased through heat treatment at 2,000°C or higher, thereby elevating the electrical conductivity of the fiber. Before heat treatment, addition of a substance such as boron, which enhances graphitization degree, is effective for enhancing crystallinity.

The vapor grown carbon fiber content of a negative electrode is preferably 0.01 to 20 mass%, more preferably 0.1 to 15 mass%, most preferably 0.5 to 10 mass%. When the fiber content is in excess of 20 mass%, electric capacity is lowered. When the fiber content is less than 0.01 mass%, internal resistance increases at low temperature (for example, -35°C).

The vapor grown carbon fiber has, on its surface, large amounts of irregularities and rough portions and exhibits enhanced adhesion to the carbonaceous particles serving as core. Thus, even when charging/discharging cycles are repeated, the carbon fiber, which serves as a negative electrode active material and an electrical conductivity enhancer, can stay attached onto the carbonaceous powder particles and is not dissociated therefrom, whereby electronic conductivity can be maintained and cycle characteristics are improved.

When the vapor grown carbon fiber contains a large amount of branched portions, conductive networks can be formed in an efficient manner, thereby readily attaining high electronic conductivity and thermal conductivity. In addition, the carbon fiber can be dispersed in the active substance as if engulfing the particles of the active substance, thereby enhancing the strength of the resultant negative electrode and establishing favorable contact between particles.

By virtue of vapor grown carbon fiber present among the active substance particles, retention of an electrolyte is enhanced, whereby lithium ions can be doped/undoped smoothly even at low temperature.

No particular limitation is imposed on the method for allowing carbon fiber to deposit onto a carbon powder material for a battery electrode of the present invention.

For example, a carbon fiber having a fiber diameter of 2 to 1,000 nm can be deposited on carbonaceous particles by adding the carbon fiber having a fiber diameter of 2 to 1,000 nm to an organic compound (or a solution thereof) during a step of allowing the organic compound (or a solution thereof) to attach onto and permeate into the carbonaceous particles serving as core material and bonding the carbon fiber to the incorporated organic compound. Alternatively, in the present invention, after depositing an organic substance on and allowing the organic compound to permeate into carbonaceous particles serving as core material, a mixture of particles including carbon fiber may be mixed into the carbon material particles to deposit the carbon fiber on the particles through stirring.

No particular limitation is imposed on the stirring method, and an apparatus such as a ribbon mixer, a screw kneader, a Spartan ryuzer, a Lodige mixer, a planetary mixer, or a general-purpose mixer may be employed.

No particular limitation is imposed on the time and temperature during the stirring process. These factors are appropriately determined in accordance with the composition, viscosity, and other properties of the particles and organic substance. Generally, the temperature is about 0°C to about 150°C, preferably about 20°C to about 100°C.

[Heat treatment conditions]

In order to enhance charge/discharge capacity through intercalation of lithium ions or other materials, enhancement in crystallinity of the carbon material is required. Since the crystallinity of carbon is generally enhanced in accordance with the maximum point of thermal hysteresis, a high heat treatment temperature is preferred for attaining an enhanced battery performance.

The carbon powder material for a battery electrode according to the present invention, in the case of using a graphite powder as a core material which already has a high crystallinity, does not particularly require a high-temperature heat treatment. However, a heat treatment is required to some extent for improving the crystallinity of a compounded carbon layer. Specifically, such heat treatment is performed at 1,800 to 3,300°C, preferably 2,300°C or higher, more preferably 2,500°C or higher, even more preferably 2,800°C or higher, most preferably 3,000°C or higher. When the heat treatment temperature is lower than 1,800°C, crystallinity the compounded carbon layer obtains by the heat treatment is insufficient, resulting in low discharge capacity and deterioration of coulombic efficiency.

The temperature elevation rate for heat treatment does not greatly affect the performance of the carbon powder material, so long as it falls within a range of the maximum temperature elevation rate and the minimum one employed in any known apparatus. Since the carbon powder does not raise any problems as would be experienced with molding material or similar materials; e.g., cracking, a faster heating rate is preferred from the viewpoint of costs. The time required to reach the highest temperature from room temperature is preferably 12 hours or shorter, more preferably 6 hours or shorter, particularly preferably 2 hours or shorter.

Any known heating apparatus such as an Acheson furnace or a direct heating furnace may be employed. Use of these apparatus is advantageous from the viewpoints of costs. However, nitrogen present in the apparatus may lower the resistance of the treated powder, and oxygen may reduce, through oxidation, the strength of the carbonaceous material. Therefore, it is preferable to use a furnace having such a structure that the inside atmosphere can be maintained to be an inert gas such as argon or helium. Examples of such furnaces include a batch furnace which allows replacement of the inside atmosphere gas after completion of pressure reduction of a reactor, and a batch furnace and a continuous furnace, in the form of a tubular furnace, which allows control of the atmosphere inside the furnace.

[Carbon powder material for battery electrode]

The carbon powder material for a battery electrode according to the present invention preferably has a mean roundness (for the method of calculation, see the below-described Examples section) as measured by use of a flow particle image analyzer of 0.85 to 0.99. When the mean roundness is less than 0.85, the filling density of the material during formation of an electrode cannot be elevated, thereby lowering the charge capacity per volume, whereas when the mean roundness is in excess of 0.99, it means that the material includes virtually no microparticles which have low roundness, thereby failing to elevate the discharge capacity of the formed electrode. Furthermore, the amount of particles having a roundness less than 0.90 is preferably controlled to be within a range of 2 to 20% by number.

The carbon powder material for a battery electrode according to the present invention Preferably has a mean particle size of 10 to 40 $\mu$m, more preferably 10 to 30 $\mu$m, as determined by laser diffraction.

When the mean particle size is too small, such carbonaceous particles are not effectively involved in electrochemical reaction with lithium ions, thereby deteriorating capacity and cycle characteristics. Specifically, when the mean particles size is smaller than 1 $\mu$m, such particles tend to crack along a specific crystal direction during pulverization, thereby readily producing particles of a high aspect ratio; i.e., increasing specific surface area. In the case of fabrication of a battery electrode, a negative electrode is generally produced by preparing a paste containing a negative electrode material with a binder and coating with the paste. When the mean particle size of the negative electrode material is smaller than 10 $\mu$m, the material contains a considerably large amount of microparticles smaller than 1 $\mu$m, thereby elevating the viscosity of the paste, resulting in poor coatability.

When the mean particle size is 40 $\mu$m or larger, it means that the material contains particles of 80 $\mu$m or larger, and the electrode surface becomes to have significant irregularities and rough portions, which may cause flaws on a separator employed in a battery. Thus, a carbon material containing virtually no particles of 1 $\mu$m or less and of 80 $\mu$m or more is preferably employed.

In the carbon powder material for a battery electrode according to the present invention, $C_0$ of a (002) plane as measured by means of X-ray diffractometry is preferably 0.6703 to 0.6800 nm, and the laser Raman R value preferably is 0.01 to 0.9. Moreover, in a particle constituting the carbon powder material for a battery electrode according to the present invention, it is preferable that crystalline carbon portion and an amorphous carbon portion be present dispersed, and the area ratio of crystalline carbon portion to an amorphous carbon portion in a bright field image observed under a transmission electron microscope is 99 to 30 : 1 to 70, more preferably 95 to 70 : 5 to 30.

Particles constituting the carbon powder material for a battery electrode according to the present invention may contain boron. The amount of boron is preferably 10 to 5,000 ppm based on the particle. By heat treatment at 1,800 to 3,300°C in the presence of boron, graphitization of carbon can be accelerated. Boron may be present in either or both of the core material and the carbon layer present on the surface of the core material. In a case of allowing boron to be contained in the surface carbon layer, boron can be incorporated into the carbon layer after polymerization of organic compound, by adding boron or a boron compound before heat treatment. Examples of boron compound include boron carbide ($B_4C$), boron oxide ($B_2O_3$), boron in the elemental state, boric acid ($H_3BO_3$) and borate.

[Fabrication of secondary battery]

By use of the carbon powder material for a battery electrode according to the present invention, a lithium ion battery can be fabricated through a known method.

A lithium battery electrode is preferably formed from a carbon powder material having a small specific surface area. The carbon powder material of the present invention preferably has a specific surface area of 0.2 to 5 m$^2$/g, more

preferably 0.2 to 3 $m^2$/g, as measured through a BET method. When the specific surface area exceeds 5 $m^2$/g, surface activity of the carbon powder material increases, and coulombic efficiency is lowered as a result of, for example, decomposition of an electrolytic solution. In order to increase capacity of a battery, the filling density of the carbon powder material must be increased. In order to increase the filling density, the closer to spherical shape the shape of the carbon powder material particle, the more preferable. When the shape of each particle of the carbon powder material is represented by aspect ratio (i.e., the length of the major axis/the length of the minor axis), the aspect ratio is 6 or less, preferably 5 or less. The aspect ratio may be obtained by use of, for example, a micrograph of the carbon powder material. Alternatively, the aspect ratio may be calculated through the following procedure: the mean particle size (A) of the carbon powder material is measured through a laser diffraction-scattering method; the mean particle size (B) of the carbon powder material is measured through an electrical detection method (a Coulter counter method); each particle of the carbon powder material is regarded as a disk, with the bottom diameter of the disk being represented by (A); the volume (C) of the disk is calculated from the formula: $C = 4/3 \times (B/2)^3\pi$; the thickness (T) of the disk is calculated from the formula: $T = C/(A/2)^2\pi$; and therefore the aspect ratio is calculated as A/T.

When a lithium battery electrode is formed from a carbon powder material exhibiting good fillability and having high bulk density, the electrode exhibits high discharge capacity per volume.

A battery electrode may be generally produced by diluting a binder with a solvent, kneading the diluted binder with a negative electrode material, and applying the mixture to a collector (substrate).

Any known binders may be used in the present invention. Examples include fluorine-containing polymers such as polyvinylidene fluoride and polytetrafluoroethylene, and rubbers such as SBR (styrene-butadiene rubber). Any known solvent suitable for the binder used may be employed. For example, when a fluorine-containing polymer is employed as a binder, toluene or N-methylpyrrolidone may be employed as a solvent, and when SBR is employed as a binder, water may be employed as a solvent.

The amount of binder to be employed depends on the type of the binder and thus cannot be simply specified. In the case where such a fluorine-containing polymer is employed as a binder, the amount is preferably 5 to 20 parts by mass, on the basis of 100 parts by mass of a negative electrode material. In the case where SBR is employed as a binder, the amount is preferably 1 to 10 parts by mass, more preferably about 1.5 to 5 parts by mass, on the basis of 100 parts by mass of a negative electrode material.

Kneading of the binder with the battery electrode carbon powder material of the present invention produced by incorporating a carbon layer into a substrate through deposition and/or permeation may be carried out by use of any known apparatus such as a ribbon mixer, a screw kneader, a Spartan ryuzer, a Lodige mixer, a planetary mixer, or a general-purpose mixer.

In the present invention, a molded product prepared by pressing a mixture of the carbon powder material for a battery electrode and a binder at a pressure of $10^3$ kg/$cm^2$ or higher has an intensity ratio of 0.1 or more, preferably 0.12 or more, more preferably 0.15 or more, for peak intensity attributed to a (110) plane to peak intensity attributed to a (004) plane determined through X-ray diffraction spectroscopic analysis. With such an peak intensity ratio, a material for a battery electrode, having excellent coulombic efficiency, cycle characteristics and high current characteristics, involving little deformation and orientation due to pressurization, not deteriorating high discharge capacity of high crystalline graphite particles, and having a small irreversible capacity, can be obtained. When the peak intensity ratio of the intensity attributed to a (110) plane to that attributed to a (004) plane is 1, it represents no orientation while the ratio is 0, it represents a 100% orientated state.

Application of the kneaded mixture to a collector may be carried out through a known method. For example, the mixture is applied to the collector by use of a doctor blade, a bar coater, or a similar apparatus, and then the resultant collector is subjected to molding through, for example, roll pressing.

Examples of the material of the collector which may be employed in the present invention include known materials such as copper, aluminum, stainless steel, nickel, and alloys thereof.

Any known separator may be employed, but polyethylene- or polypropylene-made microporous film having a thickness of 5 to 50 μm is particularly preferred.

In the lithium ion battery produced using the carbon powder material of the present invention, the electrolytic solution may be any known organic electrolytic solution, and the electrolyte may be any known inorganic solid electrolyte or polymer solid electrolyte. From the viewpoint of conductivity, an organic electrolytic solution is preferred.

Examples of preferred organic solvents employable for preparing the organic electrolytic solution include ethers such as diethyl ether, dibutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol dimethyl ether and ethylene glycol phenyl ether; amides such as formamide, N-methylformamide, N,N-dimethylformamide, N-ethylformamide, N,N-diethylformamide, N-methylacetamide, N,N-dimethylacetamide, N-ethylacetamide, N,N-diethylacetamide, N,N-dimethylpropionamide and hexamethylphosphoryl amide; sulfur-containing compounds such as dimethyl sulfoxide and sulfolane; dialkyl ketones such as methyl ethyl ketone and methyl isobutyl ketone; cyclic ethers such as ethylene oxide, propylene oxide, tetrahydrofuran, 2-methoxytetrahydrofuran, 1,2-dimethoxyethane, and 1,3-dioxolan; carbonates such as ethylene carbonate and propylene carbonate; $\gamma$-butyrolactone; N-methylpyrrolidone; acetonitrile; and nitromethane. More preferred examples include esters such as ethylene carbonate, butylene carbonate, diethyl carbonate, dimethyl carbonate, propylene carbonate, vinylene carbonate and $\gamma$-butyrolactone; ethers such as dioxolan, diethyl ether and diethoxyethane; dimethyl sulfoxide; acetonitrile; and tetrahydrofuran. Particularly, carbonate-based non-aqueous solvents such as ethylene carbonate and propylene carbonate are preferably employed. These solvents may be employed singly or in combination of two or more species.

A lithium salt is employed as a solute (electrolyte) which is to be dissolved in the aforementioned solvent. Examples of generally known lithium salts include $LiClO_4$, $LiBF_4$, $LiPF_6$, $LiAlCl_4$, $LiSbF_6$, LiSCN, LiCl, $LiCF_3SO_3$, $LiCF_3CO_2$, $LiN(CF_3SO_2)_2$, and $LiN(C_2F_5SO_2)_2$.

Examples of the polymer solid electrolyte include polyethylene oxide derivatives and polymers containing the derivatives, polypropylene oxide derivatives and polymers containing the derivatives, phosphoric acid ester polymers, and polycarbonate derivatives and polymers containing the derivatives.

In a lithium ion battery which employs the negative electrode material produced using a carbon powder material of the present invention, a lithium-containing transition metal oxide is employed as a positive electrode material. The lithium-containing transition metal oxide is preferably an oxide predominantly containing lithium and at least one transition metal selected from among Ti, V, Cr, Mn, Fe, Co, Ni, Mo and W, in which the ratio by mol between lithium and the transition metal is from 0.3 to 2.2. More preferably, the positive electrode active substance is an oxide predominantly containing lithium and at least one transition metal selected from among V, Cr, Mn, Fe, Co, and Ni, in which the ratio by mol between lithium and the transition metal is from 0.3 to 2.2. The positive electrode active substance may contain Al, Ga, In, Ge, Sn, Pb, Sb, Bi, Si, P, B, etc. in an amount of less than 30 mol% on the basis of the entirety of the transition metal serving as a primary component. Among the aforementioned positive electrode active substances, a preferred substance is at least one species selected from among materials being represented by the formula $Li_xMO_2$ (wherein M represents at least one element selected from among Co, Ni, Fe, and Mn, and x is 0 to 1.2); or at least one species selected from among materials having a spinel structure and being represented by the formula $Li_yN_2O_4$ (wherein N includes at least Mn, and y is 0 to 2).

Particularly preferably, the positive electrode active substance is at least one species selected from among materials containing $Li_yM_aD_{1-a}O_2$ (wherein M represents at least one element selected from among Co, Ni, Fe and Mn; D represents at least one element selected from among Co, Ni, Fe, Mn, Al, Zn, Cu, Mo, Ag, W, Ga, In, Sn, Pb, Sb, Sr, B and P, with the proviso that the element corresponding to M being excluded; y is 0 to 1.2; and a is 0.5 to 1); or at least one species selected from among materials having a spinel structure and being represented by the formula $Li_z(N_bE_{1-b})_2O_4$ (wherein N represents Mn; E represents at least one element selected from among Co, Ni, Fe, Mn, Al, Zn, Cu, Mo, Ag, W, Ga, In, Sn, Pb, Sb, Sr, B, and P; b is 1 to 0.2; and z is 0 to 2).

Specific examples of the positive electrode active substance include $Li_xCoO_2$, $Li_xNiO_2$, $Li_xMnO_2$, $Li_xCo_aNi_{1-a}O_2$, $Li_xCo_bV_{1-b}O_z$, $Li_xCO_bFe_{1-b}O_2$, $Li_xMn_2O_4$, $Li_xMn_cCo_{2-c}O_4$, $Li_xMn_cNi_{2-c}O_4$, $Li_xMn_cV_{2-c}O_4$, and $Li_xMn_cFe_{2-c}O_4$ (wherein x is 0.02 to 1.2, a is 0.1 to 0.9, b is 0.8 to 0.98, c is 1.6 to 1.96, and z is 2.01 to 2.3). Examples of most preferred lithium-containing transition metal oxides include $Li_xCoO_2$, $Li_xNiO_2$, $Li_xMnO_2$, $Li_xCo_aNi_{1-a}O_2$, $Li_xMn_2O_4$ and $Li_xCo_bV_{1-b}O_z$ (wherein x is 0.02 to 1.2, a is 0.1 to 0.9, b is 0.9 to 0.98, and z is 2.01 to 2.3). The value x is a value as measured before initiation of charging/discharging, and is increased or decreased through charging/discharging.

No particular limitation is imposed on the mean particle size of particles of the positive electrode active substance, but the mean particle size is preferably 0.1 to 50 $\mu$m. Preferably, the volume of particles having a particle size of 0.5 to 30 $\mu$m is 95% or more on the basis of the entire volume of the positive electrode active substance particles. More preferably, the volume of particles having a particle size of 3 $\mu$m or less is 18% or less on the basis of the entire volume of the positive electrode active substance particles, and the volume of particles having a particle size of 15 $\mu$m to 25 $\mu$m inclusive is 18% or less on the basis of the entire volume of the positive electrode active substance particles. No particular limitation is imposed on the specific surface area of the positive electrode active substance, but the specific surface area as measured by means of the BET method is preferably 0.01 to 50 $m^2$/g, particularly preferably 0.2 $m^2$/g to 1 $m^2$/g. The supernatant formed when the positive electrode active substance (5 g) is dissolved in distilled water (100 ml) preferably has a pH of 7 to 12.

No particular limitation is imposed on the selection of elements required for producing a battery, other than the aforementioned elements.

EXAMPLES

The present invention will next be described in more detail with reference to representative examples, which are provided for illustration purposes only and should not be construed as limiting the invention thereto.

Method for measuring orientation characteristics of powder and electrode sheet through X-ray diffraction:

The electrode which had been subjected to pressing at a predetermined pressure was affixed to a measurement cell by use of double-faced adhesive tape. The measurement cell was then placed in an X-ray diffraction apparatus employing the following conditions:

Conditions for X-ray generation: voltage 40 kV and current 30 mA;
Measurement range: 74 to 80° ((110) plane) and 52 to 58° ((004) plane); and
Tube: copper.

The obtained waveforms were smoothed, and the background intensity and the $K\alpha_2$ peak were subtracted. For each waveform, the peak intensity ratio was calculated from the maximum peak intensity at $2\theta = 77$ to 78.5° for the (110) plane and the maximum peak intensity at $2\theta = 53.2$ to 54.7° for the (004) plane.

Method for measuring the mean roundness:

The mean roundness of the carbon powder material according to the present invention was measured by use of a flow particle image analyzer FPIA-2100 (product of Sysmex Corporation), as described below.

A measurement sample was subjected to cleaning (removal of micro dust) by use of a 106 $\mu$m filter. The sample (0.1 g) was added to ion-exchange water (20 mL), and an anionic/nonionic surfactant (0.1 to 0.5 mass%) was added to the resultant mixture so as to uniformly disperse the sample in the mixture. Dispersion of the sample was carried out for five minutes by use of ultrasonic cleaner UT-105S (product of Sharp Manufacturing Systems Corporation), thereby preparing a measurement dispersion containing the sample. The summary of measurement principle and other details are provided in, for example, "Funtai to Kogyo," VOL. 32, No. 2, 2000, and Japanese Patent Application Laid-Open (Kokai) No. 8-136439 (U.S. Patent No.5721433). Specifically, the measurement will further be described as follows.

When the measurement sample dispersion passes through the flow path of a flat, transparent flow cell (thickness: about 200 $\mu$m), the dispersion is irradiated with strobe light at intervals of 1/30 second, and photographed by a CCD camera. A predetermined number of still images were captured and image analysis was performed on the images, followed by calculation according to the following formula.

```
Roundness = (the circumference of a circle as calculated from a circle-equivalent diameter)/(the perimeter of a projected image of a particle)
```

The term "circle-equivalent diameter" refers to the diameter of a true circle having an area equal to the actual projection area of a particle that has been obtained from a photograph of the particle. The roundness of the particle is obtained by dividing the circumference of a circle as calculated based on the circle-equivalent diameter by the actual perimeter of the projected particle. For example, a particle having a true round shape has a roundness of 1, whereas a particle having a more complicated shape has a roundness of a smaller value.

The mean roundness of particles is the averaged roundness value for each of the measured particles as obtained by means of the above-described method. Method for measuring the average particle size:

The measurement was carried out by using a laser scattering particle size distribution analyzer, Microtrac HRA (product of NIKKISO Co., Ltd.). A sample (0.05 g) was placed in a 200ml beaker, two drops of a 0.1 % aqueous solution of Triton X-100 (manufactured by ICN Biochemicals, INC, distributed by Wako Pure Chemical Industries, Ltd.) were added thereto, further, 500 ml of purified water was added thereto, the resultant mixture was subjected to ultrasonic dispersion for 5 minutes, and then the measurement was carried out on the sample.

Battery evaluation method:

(1) Preparation of paste for forming electrode sheet:

Negative electrode material (9.7 g), carboxymethyl cellulose (CMC) (HB-45, product of ZEON Corporation) as a solid (1.5g) and SBR (BM-400B, product of ZEON Corporation) as a solid (1.5g) were mixed, and further, purified water was added thereto so that the total water content in the resultant mixture was 6.9 g. With a 12$\phi$-Teflon™ ball, the

mixture was kneaded by using a defoaming kneader (NBK-1:manufactured by Nippon Seiki Co., Ltd.) at 500 rpm for 5 minutes, to thereby prepare a stock liquid.

(2) Formation of electrode sheet:

By use of a doctor blade, the obtained stock liquid was applied onto a sheet of high purity copper foil so as to attain a thickness of 250 $\mu$m. The thus-obtained product was dried under vacuum at 120°C for one hour, and then subjected to punching, to thereby form an electrode having a size of 18 mm$\phi$. The thus-formed electrode was sandwiched between pressing plates made of super steel, and then subjected to pressing such that a pressure of $0.5 \times 10^3$ to $0.7 \times 10^3$ kg/cm$^2$ was applied to the electrode.
Thereafter, the resultant electrode was dried in a vacuum drying apparatus at 120°C for 12 hours, and then employed for evaluation.

(3) Fabrication of battery

A three-electrode cell was produced as follows. The below-described procedures were carried out in an atmosphere of dried argon having a dew point of -80°C or lower.
In a polypropylene-made cell (inner diameter: about 18 mm) having a screw cap, a separator (polypropylene-made microporous film (Celgard 2400)) was sandwiched between the copper-foil-coated carbon electrode (positive electrode) formed in above (2) and a metallic lithium foil (negative electrode), to thereby form a laminate. Subsequently, a metallic lithium foil serving as a reference electrode was laminated in a manner similar to that described above. Thereafter, an electrolytic solution was added to the cell, and the resultant cell was employed for testing.

(4) Electrolytic solution

EC system: The electrolytic solution was prepared by dissolving LiPF$_6$ (1 mol/liter) serving as an electrolyte, in a mixture of EC (ethylene carbonate) (8 parts by mass) and DEC (diethyl carbonate) (12 parts by mass).

(5) Charging/discharging cycle test

Constant-current constant-voltage charging/discharging test was performed at a current density of 0.2 mA/cm$^2$ (corresponding to 0.1 C).
Constant-current (CC) charging (lithium charging to carbon) was performed at 0.2 mA/cm$^2$ while voltage was increased from rest potential to 0.002 V. When the voltage reached 0.002 V, the charger was switched over to constant-voltage (CV). Subsequently, the charging was performed at 0.002 V, and was stopped when the current value decreased to 25.4 $\mu$A.
CC discharging (lithium discharging from carbon) was performed at 0.2 mA/cm$^2$ (corresponding to 0.1 C), and was cut off when a voltage of 1.5 V was attained.

Example 1:

As a graphite material serving as core material, there was employed carbonaceous powder (100 g) having a laser diffraction mean particle size of 20 $\mu$m, a mean roundness of 0.88, and an area ratio of 80:20 for crystalline carbon-portion/amorphous carbon portion as determined in a bright field image observed under a transmission electron microscope. The graphite material had a BET specific surface area of 5.6 m$^2$/g, and a C$_0$ of 0.6710 nm, as measured through X-ray diffraction spectroscopy. By a laser Raman spectrum of the surface of the graphite material, the peak intensity ratio for the peak intensity at 1,360 cm$^{-1}$ /the peak intensity at 1,580 cm$^{-1}$ was 0.21.
The graphite material (300 parts by mass), phenol (398 parts by mass), 37% formalin (466 parts by mass), hexamethylenetetramine (38 parts by mass) serving as a reaction catalyst, and water (385 parts by mass) were fed into a reaction container. The mixture was stirred at 60 rpm for 20 minutes. Air was evacuated from the reaction container to 0.4 kPa (3 Torr) while stirring was continued, the mixture was maintained in vacuum for 5 minutes, and then the pressure was recovered to atmospheric pressure. This procedure was repeated three times under continuous stirring, to thereby cause the solution to permeate deeply into granulated products. Stirring was further continued, while the mixture was heated and maintained at 150°C. The mixture initially had mayonnaise-like fluidity, but gradually, a reaction product of phenol and formaldehyde containing graphite began to separate from a layer predominantly containing water. After about 15 minutes, black particles composed of graphite and phenolic resin began to be dispersed in the reaction container. Subsequently, stirring was further continued at 150°C for 60 minutes, the contents of the reactor were cooled to 30°C, and stirring was stopped. Black particles obtained through filtration of the contents of the reactor were washed with water, filtered again, and then subjected to a drying process employing a fluidized-bed dryer. The particles were dried under 55°C hot air for 5 hours, whereby particles of graphite/phenolic resin were obtained.

The thus-obtained graphite/phenolic resin particulate product was pulverized with a Henschel mixer at 1,800 rpm for 5 minutes. The pulverized mixture was placed in a heating furnace, and air in the furnace was evacuated, followed by changing the atmosphere to argon. The mixture was heated to 3,000°C under argon flow and maintained at this temperature for 10 minutes. Subsequently, the mixture was cooled to room temperature. The thus-obtained product was sieved by use of a sieve having openings of 63 $\mu$m. The undersized product was employed as a negative electrode material sample. The selected area electron diffraction pattern was analyzed for square regions (5 $\mu$m $\times$ 5 $\mu$m) arbitrary selected from a transmission electron microscope image (x 25,000) of the sample. The analysis revealed that the area ratio of a region having two or more spots to a region having a single spot attributed to the (002) plane in the diffraction pattern was found to be 82 : 18. $C_0$ measured through X-ray diffraction spectroscopy was found to be 0.6715 nm. By a laser Raman spectrum of the surface of the graphite material, the peak intensity ratio for the peak intensity at 1,360 cm$^{-1}$ /the peak intensity at 1,580 cm$^{-1}$ was found to be 0.20. The results indicate that the negative electrode material sample had high crystallinity similar to that of the graphite material serving as core material. These compounded graphite particles were found to have a mean particle size of 15 $\mu$m, a mean roundness of 0.92 and a specific surface area of 1.5 m$^2$/g. The amount of carbon layer derived from phenolic resin was 50.8 parts by mass based on 100 parts by mass of the core material graphite particles.

By use of the compounded graphite particles, an electrode sheet samples were formed through the aforementioned method. Table 1 shows the orientation characteristics of the powders and the electrode sheets, as determined through X-ray diffraction. Each electrode sheet was placed in a battery testing apparatus using a single cell and the EC system serving as an electrolyte for a cell test.

The testing apparatus was used to measure capacity and coulombic efficiency after the first cycle of a charging/discharging test and capacity after 50 test cycles. The results are shown in Table 2.

Example 2:

As a graphite material serving as a core material, there was employed a carbonaceous powder (100 g) prepared by processing flake graphite material having a mean particle size of 5 $\mu$m with a hybridizer (product of Nara Machinery Co., Ltd.) for rounding the particles, and having a laser diffraction mean particle size of 15 $\mu$m, a mean roundness of 0.86, and an area ratio of 90:10 for crystalline carbon-portion/amorphous carbon portion as determined in a bright field image observed under a transmission electron microscope. The graphite particles had a BET specific surface area of 5.3 m$^2$/g, and a $C_0$ of 0.6712 nm, as measured through X-ray diffraction spectroscopy. By a laser Raman spectrum of the surface of the graphite material, the peak intensity ratio for the peak intensity at 1,360 cm$^{-1}$ /the peak intensity at 1,580 cm$^{-1}$ was found to be 0.20. The graphite powder was further treated in a manner similar to that of Example 1.

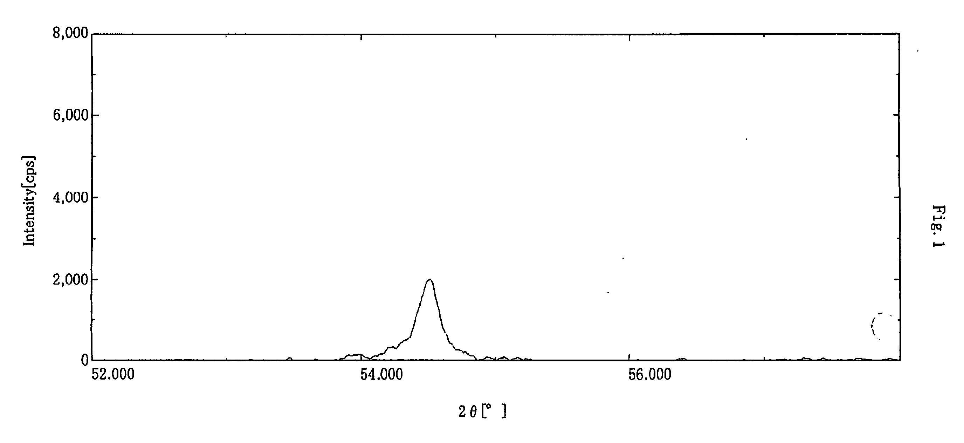

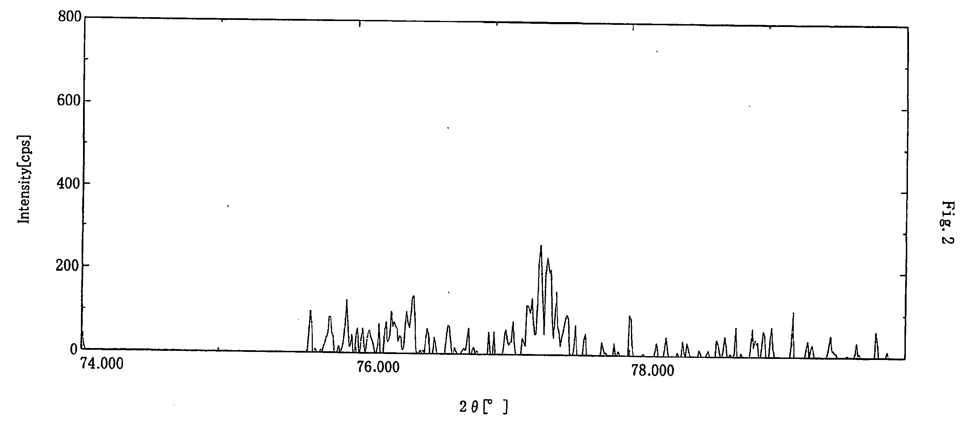

The orientation characteristics of the powders and the electrode sheets were determined through X-ray diffraction. Fig. 1 shows an X-ray diffraction pattern of an electrode sheet at the (004) plane, and Fig. 2 shows an X-ray diffraction pattern of an electrode sheet at the (110) plane. The maximum peak intensity ratios are shown in Table 1.

The testing apparatus was used to measure capacity and coulombic efficiency after the first cycle of a charging/discharging test and capacity after 50 test cycles. The results are shown in Table 2.

Example 3 (not according to the invention, for reference):

As a graphite material serving as a core material, there was employed a carbonaceous powder (100 g) that had a laser diffraction mean particle size of 15 $\mu$m, a mean roundness of 0.88, and an area ratio 80 : 20 for crystalline carbon portion/amorphous portion as determined in a bright field image observed under a transmission electron microscope. The graphite particles had a BET specific surface area of 5.6 m$^2$/g, and a $C_0$ of 0.6716 nm, as measured through X-ray diffraction spectroscopy. By a laser Raman spectrum of the surface of the graphite material, the peak intensity ratio for the peak intensity at 1,360 cm$^{-1}$ /the peak intensity at 1,580 cm$^{-1}$ was found to be 0.22.

An ethanol solution of phenolic resin monomers (55 parts by mass in terms of resin solid) and ethanol (50 parts by mass) were mixed and stirred until the monomers were completely dissolved in water. The thus-obtained solution was added to the aforementioned carbonaceous powder so that the phenolic resin solid content was adjusted to 20 mass% with respect to the carbonaceous powder. The mixture was kneaded for 30 minutes by use of a planetary mixer. The kneaded mixture was dried in a dryer under reduced pressure at 150°C for 2 hours. Subsequently, the mixture was placed in a heating furnace, and air was evacuated from the furnace, followed by changing the atmosphere to argon. The mixture was heated to 3,000°C under argon flow and maintained at this temperature for 10 minutes. Subsequently, the mixture was cooled to room temperature. The thus-obtained product was sieved by use of a sieve having openings of 63 $\mu$m. The undersized product was employed as a negative electrode material sample. Thus, the negative electrode material of Example 3 was produced. By a laser Raman spectrum of the surface of the graphite material, the peak intensity ratio for the peak intensity at 1,360 cm$^{-1}$ /the peak intensity at 1,580 cm$^{-1}$ was found to be 0.24. The negative electrode material sample was further treated in the same manner as in Example 1.

Each electrode sheet was placed in a battery testing apparatus using a single cell and the EC system serving as an electrolyte for a cell test.

Table 1 shows the orientation characteristics of the powders and the electrode sheets, as determined through X-ray diffraction. The above testing apparatus was used to measure capacity and coulombic efficiency after the first cycle of a charging/discharging test and capacity after 50 test cycles. The results are shown in Table 2.

Example 4:

Samples were prepared by the same manner as in Example 1 except that a vapor grown carbon fiber (5 mass%) (fiber diameter: 150 nm, aspect ratio: 100) which had been graphitized at 2,800°C was added to and mixed with the content of the reaction container before reaction and then stirred. The orientation characteristics of the powders and the electrode sheets (shown in Table 1) were determined through X-ray diffraction in the same manner as in Example 1. Each electrode sheet was placed in a battery testing apparatus using a single cell and the EC system serving as an electrolyte for a cell test. The testing apparatus was used to measure capacity and coulombic efficiency after the first cycle of a charging/discharging test and capacity after 50 test cycles. The results are shown in Table 2.

Comparative Example 1:

A carbonaceous powder serving as a core material in Example 1 (laser diffraction mean particle size : 20 $\mu$m, mean roundness: 0.88, and an area ratio of 80 : 20 for crystalline carbon portion/amorphous carbon portion as determined in a bright field image observed under a transmission electron microscope) was employed without coating the surface of the material with carbon layer. By a laser Raman spectrum of the surface of the graphite material, the peak intensity ratio for the peak intensity at 1,360 cm$^{-1}$ /the peak intensity at 1, 580 cm$^{-1}$ was found to be 0.39.

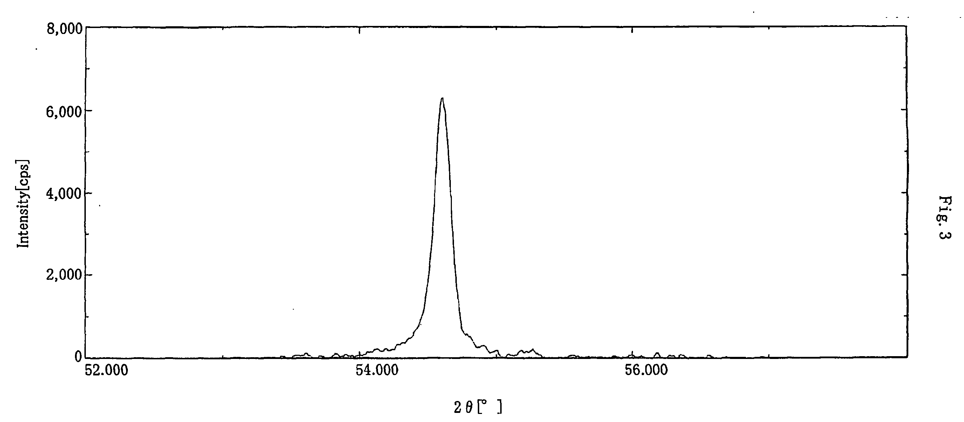

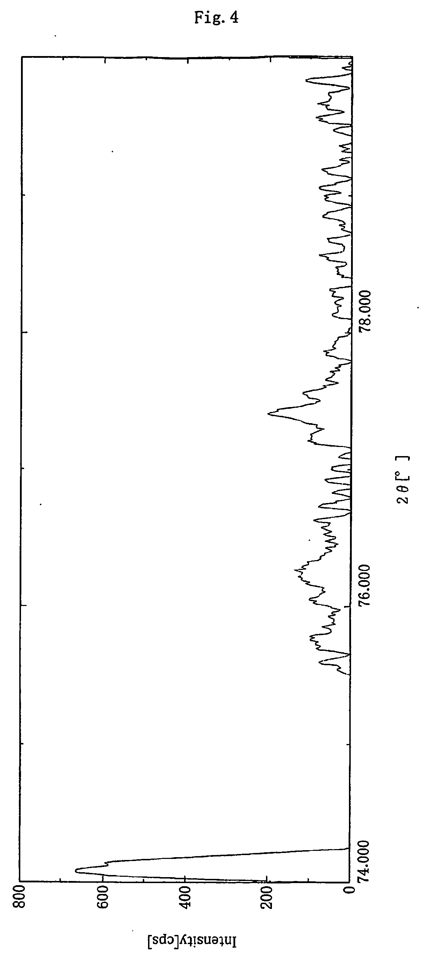

The orientation characteristics of the samples obtained in Comparative Example 1 were determined through X-ray diffraction in the same manner as in Example 1. The X-ray diffraction peak of an the electrode sheet at the (004) plane is shown in Fig. 3, and the peak at the (110) plane is shown in Fig. 4. The maximum peak intensity ratios are shown in Table 1. Each electrode sheet was placed in a battery testing apparatus using a single cell and the EC system serving as an electrolyte for a cell test, and by use of the testing apparatus, capacity and coulombic efficiency after the first cycle of a charging/discharging test and capacity after 50 test cycles were measured. The results are shown in Table 2.

Comparative Example 2:

The same materials and treatment as those of Example 1 were employed except that the final heat treatment was performed at 1,000°C, to thereby prepare samples of Comparative Example 2.

The selected area electron diffraction pattern was analyzed for square regions (5 $\mu$m $\times$ 5 $\mu$m) arbitrary selected from a cross-section TEM image of the sample. The analysis revealed that the area ratio for a region having two or more spots to a region having a single spot attributed to the (002) plane in the diffraction pattern was found to be 25 : 75. Capacity and coulombic efficiency after the first cycle of a charging/discharging test and capacity after 50 test cycles were measured. The results are shown in Table 2.

Table 1

| Sample | Peak intensity ratio | | |
|---|---|---|---|
| | No pressing (powder) | Pressed at 1 ton | Pressed at 3 tons |
| Example 1 | 0.45 | 0.13 | 0.12 |
| Example 2 | 0.53 | 0.20 | 0.17 |
| Example 3* | 0.59 | 0.28 | 0.19 |
| Example 4 | 0.44 | 0.12 | 0.11 |
| Comparative Example 1 | 0.17 | 0.037 | 0.032 |
| Comparative Example 2 | 0.18 | 0.035 | 0.033 |
| * for reference | | | |

Table 2

| Sample | Capacity (mAh/g) (1st Cycle) | Coulombic efficiency (%) (1st Cycle) | Capacity (mAh/g) (After 50 Cycles) |
|---|---|---|---|
| Example 1 | 360 | 94 | 356 |
| Example 2 | 352 | 93 | 349 |
| Example 3* | 350 | 92 | 345 |
| Example 4 | 353 | 93 | 352 |
| Comparative Example 1 | 330 | 90 | 325 |
| Comparative Example 2 | 350 | 89 | 310 |
| * for reference | | | |

**INDUSTRIAL APPLICABILITY**

According to the present invention, a carbon powder material having high discharge capacity and small irreversible capacity and exhibiting excellent coulombic efficiency and cycle characteristics, which is useful as a lithium ion secondary battery negative electrode material, can be screened by use of X-ray parameter which shows the carbon particle orientation of the produced electrode. The method for producing a carbon powder material of the present invention has excellent cost-effectiveness and mass productivity, employs a coating material easy to handle, and is an improved method which ensures safety.

When the battery electrode material produced using the carbon powder material according to the present invention is employed for producing a battery, the battery attains a discharge capacity of 340 mAh/g or more, specifically 340 to 365 mAh/g.

**Claims**

1.   A carbon powder material for a battery electrode, which is a composite of carbonaceous particles having a laser diffraction mean particle size of 10 to 40 $\mu$m and a mean roundness of the carbonaceous particles as measured by use of a flow particle image analyzer is 0.85 to 0.99 as core particles and a carbon material derived from an organic compound,
     wherein said carbon powder material is prepared by a process comprising:

     - mixing the carbonaceous particles with the organic compound serving as a polymer source material,
     - allowing the organic compound or a solution thereof to deposit onto and permeate into the carbonaceous particles by evacuating the reaction system to a pressure of 0.133 kPa to 13.3 kPa (1 to 100 Torr) and then adjusting to ambient pressure,
     - polymerizing the organic compound,
     - and then heating at 1,800 to 3,300°C to thereby graphitize and/or carbonize the particles,

     whereby said carbon powder material is obtained in which graphite crystalline structure regions and amorphous structure regions are dispersed from the surface to the center in each of the particles constituting the carbon powder material,
     and wherein said carbon powder material, when mixed with a binder resin selected from styrene-butadiene rubber and fluorine-containing polymers selected from polyvinylidene fluoride and polytetrafluoroethylene and pressed to a sheet at $10^3$ kg/cm$^2$, has an intensity ratio of 0.1 or more for peak intensity attributed to a (110) plane to peak intensity attributed to a (004) plane determined through X-ray diffraction spectroscopic analysis.

2.   The carbon powder material for a battery electrode as claimed in claim 1, wherein the carbonaceous particles are composed of natural graphite, petroleum-derived pitch coke or coal-derived pitch coke.

3.   The carbon powder material for a battery electrode as claimed in claim 1, wherein the carbonaceous particles are composed of high-crystallinity natural graphite which has the $C_0$ value of a (002) plane as determined through X-ray diffraction spectroscopy of 0.6703 to 0.6800 nm, La (crystallite size in the a-axis direction) of greater than 100 nm (La > 100 nm) and Lc (crystallite size in the c-axis direction) of greater than 100 nm (Lc > 100 nm).

4. The carbon powder material for a battery electrode as claimed in claim 1, wherein the laser Raman R value of the carbonaceous particles (the ratio of a peak intensity at 1,360 $cm^{-1}$ to a peak intensity at 1,580 $cm^{-1}$ in the laser Raman spectrum) is 0.01 to 0.9.

5. The carbon powder material for a battery electrode as claimed in claim 1, wherein the area ratio of a region including a diffraction pattern having two or more spots to a region including only one spot attributed to a (002) plane is 95 to 50 : 5 to 50 in a 5 $\mu$m square region arbitrarily selected from a transmission electron microscope bright field image of a cross-section surface obtained by cutting the carbonaceous particles into flake form.

6. The carbon powder material for a battery electrode as claimed in claim 1, wherein the carbon material derived from the organic compound is contained in an amount of 2 to 200 parts by mass based on 100 parts by mass of carbonaceous particles serving as a core material.

7. The carbon powder material for a battery electrode as claimed in claim 1, wherein the area ratio of a region including a diffraction pattern having two or more spots to a region including only one spot attributed to a (002) plane is 99 to 30 : 1 to 70 in a 5 $\mu$m square region arbitrarily selected from a transmission electron microscope bright field image of a cross-section surface obtained by cutting the carbon powder material for a battery electrode into flake form.

8. The carbon powder material for a battery electrode as claimed in claim 1, wherein the carbon powder material contains boron in an amount of 10 ppm to 5,000 ppm.

9. The carbon powder material for a battery electrode as claimed in claim 1, wherein the carbon powder material contains carbon fibers having a fiber diameter of 2 to 1,000 nm.

10. The carbon powder material for a battery electrode as claimed in claim 9, wherein at least a portion of the carbon fibers is deposited on a surface of the carbon powder material.

11. The carbon powder material for a battery electrode as claimed in claim 9, which contains carbon fibers in an amount of 0.01 to 20 parts by mass based on 100 parts by mass of the carbon powder material.

12. The carbon powder material for a battery electrode as claimed in claim 9, wherein the carbon fibers are vapor grown carbon fibers having an aspect ratio of 10 to 15,000.

13. The carbon powder material for a battery electrode as claimed in claim 12, wherein the vapor grown carbon fibers are graphite carbon fibers which have undergone heat treatment at 2,000°C or higher.

14. The carbon powder material for a battery electrode as claimed in claim 12, wherein the vapor grown carbon fibers have, in their interior, a hollow structure.

15. The carbon powder material for a battery electrode as claimed in claim 12, wherein the vapor grown carbon fibers contain branched carbon fibers.

16. The carbon powder material for a battery electrode as claimed in claim 12, wherein the vapor grown carbon fibers have a mean interlayer spacing ($d_{002}$) of a (002) plane of 0.344 nm or less as measured by means of X-ray diffractometry.

17. The carbon powder material for a battery electrode as claimed in claim 1, wherein the carbon powder material satisfies at least one of the following requirements:

(1) mean roundness as measured by use of a flow particle image analyzer is 0.85 to 0.99;
(2) Co value of a (002) plane as measured by means of X-ray diffractometry is 0.6703 to 0.6800 nm, La (crystallite size in the a-axis direction) is greater than 100 nm (La > 100nm), and Lc (crystallite size in the c-axis direction) is greater than 100 nm (Lc > 100nm);
(3) BET specific surface area is 0.2 to 5 $m^2/g$;

(4) true density is 2.21 to 2.23 g/cm$^3$;

(5) laser Raman R value (the ratio of a peak intensity at 1,360 cm$^{-1}$ in a laser Raman spectrum to a peak intensity at 1,580 cm$^{-1}$ in the spectrum) is 0.01 to 0.9; and

(6) mean particle size as measured through laser diffractometry is 10 to 40 $\mu$m.

18. The carbon powder material for a battery electrode as claimed in claim 1, which has an initial discharge capacity of 340 mAh/g or higher.

19. A method for producing the carbon powder material according to claim 1, comprising

- mixing the carbonaceous particles with the organic compound,
- allowing the organic compound or a solution thereof to deposit onto and permeate into the carbonaceous particles by evacuating the reaction system to a pressure of 0.133 kPa to 13.3 kPa (1 to 100 Torr) and then adjusting to ambient pressure,
- polymerizing the organic compound
- and then heating at 1,800 to 3,300°C to thereby graphitize and/or carbonize the particles.

20. The method for producing a carbon powder material as claimed in claim 19, wherein the step of polymerizing the organic compound includes heat treatment at 100 to 500°C, and the step of carbonizing and/or graphitizing the particles includes heat treatment at 2,300°C to 3,300°C.

21. The method for producing a carbon powder material as claimed in claim 19, wherein the carbonaceous particles are natural graphite particles.

22. A method for producing the carbon powder material according to claim 19, wherein the carbon powder material contains carbon fibers having a filament diameter of 2 to 1,000 nm with at least portion of the carbon fibers depositing on the carbonaceous particles, comprising a step of treating the carbonaceous particles with the mixture or solution containing the organic compound and carbon fibers having a filament diameter of 2 to 1,000 nm to thereby allow the carbon fibers to deposit onto the particles.

23. A paste for producing an electrode, which comprises a carbon powder material for a battery electrode as recited any one of claims 1 to 18 and a binder.

24. An electrode formed of a compact of a paste as recited in claim 23.

25. The electrode as claimed in claim 24, wherein the ratio of peak intensity attributed to a (110) plane to that attributed to a (004) plane is 0.1 or more as determined through X-ray diffraction spectroscopic analysis on the compact.

26. Use of the electrode claimed in claim 24 for producing a battery.

27. Use according to claim 26, wherein the battery is a secondary battery.

28. Use according to claim 27, wherein the battery employs a non-aqueous electrolytic solution and/or a non-aqueous polymer electrolyte, and the non-aqueous electrolytic solution and/or the non-aqueous polymer electrolyte contains a non-aqueous solvent which is at least one species selected from the group consisting of ethylene carbonate, diethyl carbonate, dimethyl carbonate, methyl ethyl carbonate, propylene carbonate, butylene carbonate, and vinylene carbonate.

**Patentansprüche**

1. Kohlenstoffpulvermaterial für eine Batterieelektrode, das ein Verbund von kohlenstoffhaltigen Teilchen mit einer durch Laserbeugung gemessenen mittleren Teilchengröße von 10 bis 40 $\mu$m und einer mittleren Rundheit der Kohlenstoffteilchen, gemessen durch die Verwendung eines Analysiergeräts von Bildern von Fließteilchen, von 0,85 bis 0,99 als Kernteilchen und eines von einer organischen Verbindung abgeleiteten Kohlenstoffmaterials ist, wobei das Kohlenstoffpulvermaterial durch ein Verfahren hergestellt wird, welches umfasst:

- das Mischen der kohlenstoffhaltigen Teilchen mit der organischen Verbindung, die als Polymerquellenmaterial dient,
- das Zulassen, dass die organische Verbindung oder eine Lösung davon auf die kohlenstoffhaltigen Teilchen abgeschieden wird und in diese permeiert, indem das Reaktionssystem bis auf einen Druck von 0,133 kPa bis 13,3 kPa (1 bis 100 Torr) evakuiert wird und dann auf Umgebungsdruck angepasst wird,
- das Polymerisieren der organischen Verbindung,
- und dann das Erhitzen auf 1800 bis 3300°C, wobei die Teilchen graphitiert und/oder karbonisiert werden,

wobei das Kohlenstoffpulvermaterial erhalten wird, wobei graphitkristalline Strukturbereiche und amorphe Strukturbereiche von der Oberfläche bis zum Zentrum jedes der das Kohlenstoffpulvermaterial ausmachenden Teilchen dispergiert sind, und

wobei das Kohlenstoffpulvermaterial, wenn es mit einem Bindemittelharz, das unter Styrolbutadienkautschuk ausgewählt ist, und Fluor enthaltenden Polymeren, die unter Polyvinylidenfluorid und Polytetrafluorethylen ausgewählt sind, gemischt und zu einer Platte bei $10^3$ kg/cm$^2$ gepresst wird, ein durch Röntgenbeugungsspektroskopieanalyse bestimmtes Intensitätsverhältnis von 0,1 oder mehr für die Peakintensität, die auf eine (110)-Ebene zurückzuführen ist, zu der Peakintensität, die auf eine (004)-Ebenen zurückzuführen ist, aufweist.

2.  Kohlenstoffpulvermaterial für eine Batterieelektrode nach Anspruch 1, wobei die kohlenstoffhaltigen Teilchen aus natürlichem Graphit, aus von Petroleum abgeleitetem Pechkoks oder aus von Kohle abgeleitetem Pechkoks zusammengesetzt sind.

3.  Kohlenstoffpulvermaterial für eine Batterieelektrode nach Anspruch 1, wobei die kohlenstoffhaltigen Teilchen aus hochkristallinem natürlichen Graphit, das einen $C_0$-Wert einer (002)-Ebene, bestimmt durch Röntgenbeugungsspektroskopie, von 0,6703 bis 0,6800 nm aufweist, einen La-Wert (Kristallgröße in der a-Achsenrichtung) von mehr als 100 nm (La > 100 nm) und einen Lc-Wert (Kristallgröße in der c-Achsenrichtung) von mehr als 100 nm (Lc > 100 nm) aufweist, zusammengesetzt ist.

4.  Kohlenstoffpulvermaterial für eine Batterieelektrode nach Anspruch 1, wobei der Laser-Raman-R-Wert der kohlenstoffhaltigen Teilchen (das Verhältnis der Peakintentsität bei 1360 cm$^{-1}$ zud der Peakintensität bei 1580 cm$^{-1}$ in dem Laser Raman Spektrum) 0,01 bis 0,9 ist.

5.  Kohlenstoffpulvermaterial für eine Batterieelektrode nach Anspruch 1, wobei das Flächenverhältnis einer Region, die ein Beugungsmuster mit zwei oder mehr Stellen aufweist, zu einer Region, die nur eine Stelle aufweist, die auf eine (002)-Ebene zurückzuführen ist, 95 bis 50 : 5 bis 50 in einer quadratischen Region von 5 $\mu$m Seitenlänge ist, die aus einem Hellfeldbild eines Transmissionseleketronenmikroskops einer Querschnittsoberfläche ausgewählt ist, die durch Schneiden der kohlenstoffhaltigen Teilchen in Flockenform erhalten wird.

6.  Kohlenstoffpulvermaterial für eine Batterieelektrode nach Anspruch 1, wobei das von der organischen Verbindung abgeleitete Kohlenstoffmaterial in einer Menge von 2 bis 200 Massenteilen, bezogen auf 100 Massenteile von kohlenstoffhaltigen Teilchen, die als Kernmaterial dienen, enthalten ist.

7.  Kohlenstoffpulvermaterial für eine Batterieelektrode nach Anspruch 1, wobei das Flächenverhältnis einer Region, die ein Beugungsmuster mit zwei oder mehr Stellen umfasst, zu einer Region, die nur eine Stelle umfasst, die auf eine (002)-Ebene zurückzuführen ist, 99 bis 30 : 1 bis 70 in einer quadratischen Region mit 5 $\mu$m Seitenlänge ist, die beliebig aus einem Hellfeldbild einer Transmissionseleketronenmikroskopie einer Querschnittsoberfläche ausgewählt ist, die durch Schneiden des Kohlenstoffmaterials für eine Batterieelektrode in Flockenform erhalten wird.

8.  Kohlenstoffpulvermaterial für eine Batterieelektrode nach Anspruch 1, wobei das Kohlenstoffpulvermaterial Bor in einer Menge von 10 ppm bis 5000 ppm enthält.

9.  Kohlenstoffpulvermaterial für eine Batterieelektrode nach Anspruch 1, wobei das Kohlenstoffpulvermaterial Kohlenstofffasern mit einem Faserdurchmesser von 2 bis 1000 nm enthält.

10. Kohlenstoffpulvermaterial für eine Batterieelektrode nach Anspruch 9, wobei mindestens ein Teil der Kohlenstofffasern auf einer Oberfläche des Kohlenstoffpulvermaterials abgeschieden ist.

11. Kohlenstoffpulvermaterial für eine Batterieelektrode nach Anspruch 9, die Kohlenstofffasern in einer Menge von 0,01 bis 20 Massenteilen, bezogen auf 100 Massenteile des Kohlenstoffpulvermaterials, enthält.

12. Kohlenstoffpulvermaterial für eine Batterieelektrode nach Anspruch 9, wobei die Kohlenstofffasern dampfgewachsene Kohlenstofffasern mit einem Längen-zu-Breiten-Verhältnis von 10 bis 15 000 sind.

13. Kohlenstoffpulvermaterial für eine Batterieelektrode nach Anspruch 12, wobei die dampfgewachsenen Kohlenstofffasern Graphitkohlenstofffasern sind, die einer Hitzebehandlung bei 2000°C oder höher unterworfen worden sind.

14. Kohlenstoffpulvermaterial für eine Batterieelektrode nach Anspruch 12, wobei die dampfgewachsenen Kohlenstofffasern in ihrem Inneren eine Hohlstruktur aufweisen.

15. Kohlenstoffpulvermaterial für eine Batterieelektrode nach Anspruch 12, wobei die dampfgewachsenen Kohlenstofffasern verzweigte Kohlenstofffasern enthalten.

16. Kohlenstoffpulvermaterial für eine Batterieelektrode nach Anspruch 12, wobei die dampfgewachsenen Kohlenstofffasern einen durch Röntgenbeugungsmessung gemessenen mittleren Zwischenschichtabstand $(d_{002})$ einer (002)-Ebene von 0,344 nm oder weniger aufweisen.

17. Kohlenstoffpulvermaterial für eine Batterieelektrode nach Anspruch 1, wobei das Kohlenstoffpulvermaterial mindestens eine der folgenden Erfordernisse erfüllt:

    (1) die mittlere Rundheit, gemessen unter Einsatz eines Geräts zum Analysieren eines Bildes von Fließpartikeln, ist 0,85 bis 0,99;
    (2) der $C_0$-Wert einer (002)-Ebene, gemessen durch Röntgenbeugungsmessung, ist 0,673 bis 0,6800 nm, der La-Wert (Kristallgröße in der a-Achsenrichtung) ist größer als 100 nm (La > 100 nm) und der Lc-Wert (Kristallgröße in der c-Achsenrichtung) ist größer als 100 nm (Lc > 100 nm);
    (3) die spezifische Oberfläche nach BET ist 0,2 bis 5 $m^2$/g;
    (4) die tatsächliche Dichte ist 2,21 bis 2,23 g/$cm^3$;
    (5) der Laser-Raman-R-Wert (das Verhältnis der Peakintensität bei 1360 $cm^{-1}$ in einem Laser Raman Spektrum zu einer Peakintensität bei 1580 $cm^{-1}$ in dem Spektrum) ist 0,01 bis 0,9, und
    (6) die durch Laserbeugungsmessung gemessene mittlere Teilchengröße ist 10 bis 40 $\mu$m.

18. Kohlenstoffpulvermaterial für eine Batterieelektrode nach Anspruch 1, das eine anfängliche Entladungskapazität von 340 mAh/g oder höher aufweist.

19. Verfahren zum Herstellen des Kohlenstoffpulvermaterials nach Anspruch 1, welches

    - das Mischen der kohlenstoffhaltigen Teilchen mit der organischen Verbindung,
    - das Zulassen, dass die organische Verbindung oder eine Lösung davon auf die kohlenstoffhaltigen Teilchen abgeschieden wird und in diese permeieren, indem das Reaktionssystem auf einen Druck von 0,133 kPa bis 13,3 kPa (1 bis 100 Torr) evakuiert wird und dann auf Umgebungsdruck angepasst wird,
    - das Polymerisieren der organischen Verbindung
    - und dann das Erhitzen bei einer 1800 bis 3300°C, wobei die Teilchen graphitiert und/oder carbonisiert werden.

20. Verfahren zum Herstellen eines Kohlenstoffpulvermaterials nach Anspruch 19, wobei die Stufe der Polymerisierung der organischen Verbindung die Hitzebehandlung bei 100 bis 500°C umfasst und die Stufe des Carbonisierens und/oder Graphitierens der Teilchen die Hitzebehandlung bei 2300 bis 3300°C umfasst.

21. Das Verfahren zum Herstellen eines Kohlenstoffpulvermaterials nach Anspruch 19, wobei die Kohlenstoffteilchen natürliche Graphitteilchen sind.

22. Verfahren zum Herstellen des Kohlenstoffpulvermaterials nach Anspruch 19, wobei das Kohlenstoffpulvermaterial Kohlenstofffasern mit einem Filamentdurchmesser von 2 bis 1000 nm enthält, wobei mindestens ein Teil der Kohlenstofffasern auf den kohlenstoffhaltigen Teilchen abgeschieden sind, welches eine Stufe umfasst, in der die kohlenstoffhaltigen Teilchen mit dem Gemisch oder der Lösung, die die organische Verbindung und die Kohlenstofffasern mit einem Filamentdurchmesser von 2 bis 1000 nm enthalten, behandelt werden, wodurch zugelassen wird, dass die Kohlenstofffasern auf den Teilchen abgeschieden werden.

23. Paste zum Herstellen einer Elektrode, die ein Kohlenstoffpulvermaterial für eine Batterieelektrode nach einem der Ansprüche 1 bis 18 und ein Bindemittel umfasst.

**24.** Aus einem Presskörper einer Paste nach Anspruch 23 gebildete Elektrode.

**25.** Elektrode nach Anspruch 24, wobei das Verhältnis der durch Röntgenbeugungsspektroskopieanalyse des Presskörpers bestimmten Peakintensität, die auf eine (110)-Ebene zurückzuführen ist, zu der Peakintensität, die auf eine (004)-Ebene zurückzuführen ist, 01 oder höher ist.

**26.** Verwendung der Elektrode nach Anspruch 24, zum Herstellen einer Batterie.

**27.** Verwendung nach Anspruch 26, wobei die Batterie eine Sekundärbatterie ist.

**28.** Verwendung nach Anspruch 27, wobei die Batterie eine nicht-wässsrige elektrolytische Lösung und/oder einen nichtwässrigen Polymerelektrolyt einsetzt und die nicht-wässrige Elektrolytlösung und/oder der nicht-wässrige Polymerelektrolyt ein nicht-wässriges Lösungsmittel enthält, das mindestens ein Mitglied ist, das aus der Gruppe ausgewählt ist, die aus Ethylencarbonat, Diethylcarbonat, Dimethylcarbonat, Methylethylcarbonat, Propylencarbonat, Butylencarbonat und Vinylencarbonat besteht.


**Revendications**

**1.** Matière de poudre de carbone pour une électrode d'accumulateur, laquelle est un composite de particules carbonées présentant une taille moyenne de particule par diffraction laser de 10 à 40 $\mu$m et une rondeur moyenne des particules carbonées comme mesurée en utilisant un dispositif d'analyse d'image de particule en écoulement est de 0,85 à 0,99 comme particules de noyau et d'une matière carbonée dérivée d'un composé organique,
dans laquelle ladite matière de poudre de carbone est préparée par un procédé consistant :

- à mélanger les particules carbonées avec le composé organique servant de matière de source polymère,
- à laisser le composé organique ou une solution de celui-ci se déposer sur et perméer dans les particules carbonées par mise sous vide du système réactionnel à une pression de 0,133 kPa à 13,3 kPa (1 à 100 torr) et puis à ajuster à la pression atmosphérique,
- à polymériser le composé organique,
- et puis à chauffer à de 1 800 à 3 300°C pour graphitiser et/ou carboniser par-là les particules,

ladite matière de poudre de carbone est par-là obtenue, dans laquelle des régions de structure cristalline et des régions de structure amorphe de graphite sont dispersées à partir de la surface jusqu'au centre dans chacune des particules constituant la matière de poudre de carbone,
et dans laquelle ladite matière de poudre de carbone, lorsqu'elle est mélangée avec une résine de liant choisie parmi un caoutchouc de styrène-butadiène et des polymères contenant du fluor choisis parmi le poly(fluorure de vinylidène) et le polytétrafluoroéthylène et est comprimée en une feuille à $10^3$ kg/cm$^2$, présente un rapport d'intensité de 0,1 ou supérieur pour une intensité de pic attribuée à un plan (110) à une intensité de pic attribuée à un plan (004) déterminée par une analyse spectroscopique de diffraction aux rayons X.

**2.** Matière de poudre de carbone pour une électrode d'accumulateur selon la revendication 1, dans laquelle les particules carbonées sont constituées de graphite naturel, de coke de goudron dérivé de pétrole ou de coke de goudron dérivé de charbon.

**3.** Matière de poudre de carbone pour une électrode d'accumulateur selon la revendication 1, dans laquelle les particules carbonées sont constituées de graphite naturel de cristallinité élevée qui présente la valeur Co d'un plan (002) comme déterminée par spectroscopie de diffraction aux rayons X de 0,6703 à 0,6800 nm, La (taille de cristallite dans la direction de l'axe a) supérieur à 100 nm (La > 100 nm) et Lc (taille de cristallite dans la direction de l'axe c) supérieur à 100 nm (Lc > 100 nm).

**4.** Matière de poudre de carbone pour une électrode d'accumulateur selon la revendication 1, dans laquelle la valeur R Raman au laser des particules carbonées (le rapport d'une intensité de pic à 1 360 cm$^{-1}$ à une intensité de pic à 1 580 cm$^{-1}$ dans le spectre Raman au laser) est de 0,01 à 0,9.

**5.** Matière de poudre de carbone pour une électrode d'accumulateur selon la revendication 1, dans laquelle le rapport de surface d'une région comprenant un motif de diffraction ayant deux ou plusieurs points sur une région comprenant uniquement un point attribué à un plan (002) est de 95 à 50 : 5 à 50 dans une région carrée de 5 $\mu$m arbitrairement

choisie à partir d'une image de champ clair de microscope électronique à transmission d'une surface transversale obtenue par découpe des particules carbonées dans une forme de flocons.

6. Matière de poudre de carbone pour une électrode d'accumulateur selon la revendication 1, dans laquelle la matière de carbone dérivée du composé organique est contenue dans une quantité de 2 à 200 parties en masse rapporté à 100 parties en masse de particules carbonées servant de matière de noyau.

7. Matière de poudre de carbone pour une électrode d'accumulateur selon la revendication 1, dans laquelle le rapport de surface d'une région comprenant un motif de diffraction ayant deux ou plusieurs points sur une région comprenant uniquement un point attribué à un plan (002) est de 99 à 30 : 1 à 70 dans une région carrée de 5 $\mu$m arbitrairement choisie à partir d'une image de champ clair de microscope électronique à transmission d'une surface transversale obtenue par découpe de la matière de poudre de carbone pour une électrode d'accumulateur dans une forme de flocons.

8. Matière de poudre de carbone pour une électrode d'accumulateur selon la revendication 1, dans laquelle la matière de poudre de carbone contient du bore dans une quantité de 10 ppm à 5 000 ppm.

9. Matière de poudre de carbone pour une électrode d'accumulateur selon la revendication 1, dans laquelle la matière de poudre de carbone contient des fibres de carbone ayant un diamètre de fibre de 2 à 1 000 nm.

10. Matière de poudre de carbone pour une électrode d'accumulateur selon la revendication 9, dans laquelle au moins une portion des fibres de carbone est déposée sur une surface de la matière de poudre de carbone.

11. Matière de poudre de carbone pour une électrode d'accumulateur selon la revendication 9, laquelle contient des fibres de carbone dans une quantité de 0,01 à 20 parties en masse rapportée à 100 parties en masse de la matière de poudre de carbone.

12. Matière de poudre de carbone pour une électrode d'accumulateur selon la revendication 9, dans laquelle les fibres de carbone sont des fibres de carbone ayant cru en phase vapeur ayant un rapport d'allongement de 10 à 15 000.

13. Matière de poudre de carbone pour une électrode d'accumulateur selon la revendication 12, dans laquelle les fibres de carbone ayant cru en phase vapeur sont des fibres de carbone de graphite qui ont été soumises à un traitement thermique à 2 000°C ou supérieur.

14. Matière de poudre de carbone pour une électrode d'accumulateur selon la revendication 12, dans laquelle les fibres de carbone ayant cru en phase vapeur présentent, dans leur intérieur, une structure creuse.

15. Matière de poudre de carbone pour une électrode d'accumulateur selon la revendication 12, dans laquelle les fibres de carbone ayant cru en phase vapeur contiennent des fibres de carbone ramifiées.

16. Matière de poudre de carbone pour une électrode d'accumulateur selon la revendication 12, dans laquelle les fibres de carbone ayant cru en phase vapeur présentent un espacement moyen entre couche ($d_{002}$) d'un plan (002) de 0,344 nm ou inférieur comme mesuré par un moyen de diffractométrie aux rayons X.

17. Matière de poudre de carbone pour une électrode d'accumulateur selon la revendication 1, dans laquelle la matière de poudre de carbone satisfait au moins une des exigences suivantes :

(1) la rondeur moyenne comme mesurée en utilisant un dispositif d'analyse d'image de particule en écoulement est de 0,85 à 0,99 ;
(2) la valeur Co d'un plan (002) comme mesuré au moyen d'une diffractométrie aux rayons X est de 0,6703 à 0,6800 nm, La (taille de cristallite dans la direction de l'axe a) est supérieure à 100 nm (La > 100 nm), et Lc (taille de cristallite dans la direction de l'axe c) est supérieure à 100 nm (Lc > 100 nm) ;
(3) la surface spécifique BET est de 0,2 à 5 m$^2$/g ;
(4) la densité réelle est de 2,21 à 2,23 g/cm$^3$ ;
(5) la valeur Raman R au laser (le rapport d'une intensité de pic à 1 360 cm$^{-1}$ dans un spectre Raman au laser à une intensité de pic à 1 580 cm$^{-1}$ dans le spectre) est de 0,01 à 0,9 ; et
(6) la taille moyenne de particule comme mesurée par diffractométrie au laser est de 10 à 40 $\mu$m.

**18.** Matière de poudre de carbone pour une électrode d'accumulateur selon la revendication 1, laquelle présente une capacité de décharge initiale de 340 mAh/g ou supérieure.

**19.** Procédé de production de la matière de poudre de carbone selon la revendication 1, consistant

- à mélanger les particules carbonées avec le composé organique,
- à laisser le composé organique ou une solution de celui-ci se déposer sur et perméer dans les particules carbonées par mise sous vide du système réactionnel à une pression de 0,133 kPa à 13,3 kPa (1 à 100 torr) et puis à ajuster à la pression atmosphérique,
- à polymériser le composé organique
- et puis à chauffer à de 1 800 à 3 300°C pour graphitiser et/ou carboniser par-là les particules.

**20.** Procédé de production d'une matière de poudre de carbone selon la revendication 19, dans lequel l'étape de polymérisation du composé organique comprend un traitement thermique à de 100 à 500°C, et l'étape de carbonisation et/ou de graphitisation des particules comprend un traitement thermique à de 2 300°C à 3 300°C.

**21.** Procédé de production d'une matière de poudre de carbone selon la revendication 19, dans lequel les particules carbonées sont des particules de graphite naturel.

**22.** Procédé de production de la matière de poudre de carbone selon la revendication 19, dans lequel la matière de poudre de carbone contient des fibres de carbone ayant un diamètre de filament de 2 à 1 000 nm avec au moins une portion des fibres de carbone se déposant sur les particules carbonées,
comprenant une étape de traitement des particules carbonées avec le mélange ou une solution contenant le composé organique et des fibres de carbone ayant un diamètre de filament de 2 à 1 000 nm pour laisser par-là les fibres de carbone se déposer sur les particules.

**23.** Pâte pour produire une électrode, laquelle comprend une matière de poudre de carbone pour une électrode d'accumulateur selon l'une quelconque des revendications 1 à 18 et un liant.

**24.** Electrode formée d'un compact d'une pâte selon la revendication 23.

**25.** Electrode selon la revendication 24, dans laquelle le rapport d'intensité de pic attribuée à un plan (110) à celle attribuée à un plan (004) est de 0,1 ou supérieur comme déterminé par une analyse spectroscopique de diffraction aux rayons X sur le compact.

**26.** Utilisation de l'électrode selon la revendication 24 pour produire un accumulateur.

**27.** Utilisation selon la revendication 26, dans laquelle l'accumulateur est un accumulateur secondaire.

**28.** Utilisation selon la revendication 27, dans laquelle l'accumulateur utilise une solution électrolytique non aqueuse et/ou un électrolyte polymère non aqueux, et la solution électrolytique non aqueuse et/ou l'électrolyte polymère non aqueux contient un solvant non aqueux qui est au moins une espèce choisie dans le groupe constitué de carbonate d'éthylène, carbonate de diéthyle, carbonate de diméthyle, carbonate de méthyléthyle, carbonate de propylène, carbonate de butylène, et carbonate de vinylène.

Fig. 1

EP 1 683 219 B1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 520667 A
- JP 11310405 A
- WO 03028128 A2
- US 5093216 A
- US 20010061445 A1
- JP 11154513 A
- JP H05121066 B
- JP 8136439 A
- US 5721433 A

### Non-patent literature cited in the description

- *J. Electrochem. Soc.,* 1970, vol. 117, 222
- Novel Experimental Techniques for Carbon Materials (analysis). SIPEC CORP, 18-26, 44-50
- **MICHIO INAGAKI et al.** Guide to Carbon material. 29-40
- *Funtai to Kogyo,* 2000, vol. 32 (2